(19) Europäisches Patentamt European Patent Office Office européen des brevets

(11) **EP 2 538 240 B1**

(12) **EUROPEAN PATENT SPECIFICATION**

(45) Date of publication and mention of the grant of the patent:
**13.01.2016 Bulletin 2016/02**

(51) Int Cl.:
**G01S 7/539** (2006.01) **G01S 15/96** (2006.01)

(21) Application number: **12172773.9**

(22) Date of filing: **20.06.2012**

(54) **Underwater Detecting Device, Method and Program**

Unterwassererkennungsvorrichtung, Verfahren und Programm

Dispositif de détection sous-marine, procédé et programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2011 JP 2011138712**

(43) Date of publication of application:
**26.12.2012 Bulletin 2012/52**

(73) Proprietors:
• **Furuno Electric Co., Ltd.**
  **Hyogo 662-8580 (JP)**
• **Tohoku Gakuin University**
  **Sendai, Miyagi 981-3193 (JP)**

(72) Inventors:
• **Wang, Yong**
  **Nishinomiya-City, Hyogo (JP)**
• **Nishimori, Yasushi**
  **Nishinomiya-City, Hyogo (JP)**
• **Ogawa, Shinji**
  **Nishinomiya-City, Hyogo (JP)**
• **Ito, Masanori**
  **Sendai, Miyagi 981-3193 (JP)**
• **Matsuo, Ikuo**
  **Sendai, Miyagi 981-3193 (JP)**
• **Imaizumi, Tomohito**
  **Kamisu-shi, Ibaraki (JP)**
• **Akamatsu, Tomonari**
  **Kamisu-shi, Ibaraki (JP)**

(74) Representative: **Arrowsmith, Peter Michael E.**
  **Cleveland**
  **10 Fetter Lane**
  **London EC4A 1BR (GB)**

(56) References cited:
**GB-A- 2 412 967** **US-A- 5 377 163**
**US-A1- 2010 284 248**

**Description**

**Technical Field**

The present invention relates to an underwater detecting device, method and program for transmitting underwater an ultrasonic signal and acquiring from an echo signal thereof, information on fish serving as a detection target object, and particularly relates to an underwater detecting device, method and program for identifying a type of fish.

**Background of the Invention**

Conventionally, various underwater detecting devices having a fish type identifying function have been proposed. For example, JP07-218634A discloses an underwater detecting device for detecting a school of fish, calculating a moving speed of the school of fish based on echo signals, and identifying a type of the school of fish based on the moving speed and reflection intensities TS (Target Strength) of the school of fish.

However, with the underwater detecting device disclosed in JP07-218634A, an accuracy of the fish type identification is not always high, and the fish type may be false determined.

The document US 2010/0284248 describes a device for displaying an image determined by an ultrasonic signal underwater. A target object is plotted on a display screen with two-dimensional coordinates corresponding to its detected position. A displacement symbol is also displayed corresponding to a change in the position of the object from its previous position.

US 5,377,163 describes a technique for identifying aquatic organisms using a signature derived from a broadband acoustic signal. A broadband acoustic signal is compared with a signature database corresponding to signals collected from known aquatic life forms.

GB 2412967 describes an echo sounder with pitch and roll correction. An echo sounder is provided with phase correction circuits that adjust the phases of received echo signals based on pitch and roll angles so that the direction of an acoustic axis of a receiving beam matches the sounding direction.

**Summary of the Invention**

The present invention is made in view of the above situations, and provides an underwater detecting device, method and program having a new fish type identifying function that can identify a fish type more accurately than the conventional function.

According to one aspect of the invention, an underwater detection device is provided, which comprises a transceiver for transmitting underwater an ultrasonic signal and receiving an echo signal caused by the ultrasonic signal, and a detector for detecting, based on the echo signal, an incident angle of the ultrasonic signal with respect to an underwater moving body and a reflection intensity of the echo signal reflected on the underwater moving body.

This configuration utilizes the fact that the relation between the incident angle and the reflection intensity is different for every type of the underwater moving body (e.g., fish type). Such a relation can be provided for display purposes or for further processing such as underwater moving body identification (e.g., fish type identification) purposes.

The underwater detection device may further comprise a display unit for displaying a plurality of relations between the incident angle and the reflection intensity.

With this configuration, by using the fact that the relation between the incident angle and the reflection intensity is different for every type of the underwater moving body (e.g., fish type), such a relation can be displayed to be provided to an operator.

The detector may acquire the relation between the incident angle and the reflection intensity at a plurality of time points, and the display unit may display simultaneously the relations acquired at the plurality of time points.

With this configuration, even when the underwater moving body serving as a target is an individual body, the plurality of relations can be acquired and displayed.

Further, the detector may acquire a plurality of relations between the incident angle and the reflection intensity at a same time point, and the display unit may display simultaneously the relations.

With this configuration, when a plurality of underwater moving bodies serving as a target exist, the plurality of relations can simultaneously be acquired and displayed.

The underwater detection device may further comprise an identifier for identifying a type of the underwater moving body based on a plurality of relations between the incident angle and the reflection intensity.

This configuration utilizes the fact that the reflection intensity is different according to the incident angle corresponding to the angle at which the ultrasonic signal intersects with the underwater moving body (e.g., fish), and utilizes the fact that a characteristic of the reflection intensity depending on the incident angle is different according to the type of the underwater moving body (e.g., fish type). Therefore, by acquiring the plurality of incident angles and reflection intensities of the echo signal with respect to the underwater moving body, characteristics of the reflection intensity according to the type of the underwater moving body can be identified, and the type of the underwater moving body can be identified.

The detector may comprise an underwater moving body detector for detecting an existence of the underwater moving body based on the reflection intensity of the echo signal, an incident angle detector for detecting the incident angle based on positions of the underwater moving body detected at a plurality of timings, and an identifying information creator for creating sets of incident angle, reflection intensity by calculating the reflection intensities from the underwater moving body and associating the reflection intensities with the incident angles of the underwater moving body. The identifier may identify the type of the underwater moving body based on a distribution of the plurality of reflection intensities on an incident angle axis.

This configuration indicates a specific configuration of the detector.

Further, the identifier may divide the incident angle axis into a plurality of incident angle bins having a predetermined incident angle width, and the identifier may acquire a distribution characteristic of the reflection intensities based on a representative value of the reflection intensities in each incident angle bin, and may identify the type of the underwater moving body based on the distribution characteristic.

Further, the identifier may store a template of the distribution characteristic for every type of the underwater moving body, and the identifier may identify the type of the underwater moving body based on a relation between the acquired distribution characteristic and the template.

These configurations indicate specific configurations of the identifier.

Further, the representative value may be a maximum value or an average value or a centre value or a median value among the reflection intensities in the incident angle bin.

These configurations indicate how to define the representative value for every incident angle bin. Here, when the maximum value is used as the representative value, characteristics of the fish type appear more significantly compared to the other types of values. Therefore, the fish type can be identified further accurately.

Further, the underwater detection device may also comprise a display controller for creating image data based on at least one of the distribution of the plurality of the reflection intensities on an incident angle axis and the distribution characteristic.

With this configuration, the information relating to the fish identification can be provided to the operator in an easier understandable manner.

Further, the incident angle may be based on a normal direction of a moving direction of the underwater moving body.

According to another aspect of the invention, an underwater detection method is provided, which comprises transmitting underwater an ultrasonic signal and receiving an echo signal caused by the ultrasonic signal, and detecting, based on the echo signal, an incident angle of the ultrasonic signal with respect to an underwater moving body and a reflection intensity of the echo signal reflected on the underwater moving body.

This configuration utilizes the fact that the relation between the incident angle and the reflection intensity is different for every type of the underwater moving body (e.g., fish type). Such a relation can be used for display purposes or for further processing such as underwater moving body identification (e.g., fish type identification) purposes.

According to still another aspect of the invention, a computer-readable program causing a computer to detect underwater is provided. The program comprises causing a computer to transmit underwater an ultrasonic signal and receive an echo signal caused by the ultrasonic signal, and causing a computer to detect, based on the echo signal, an incident angle of the ultrasonic signal with respect to an underwater moving body and a reflection intensity of the echo signal reflected on the underwater moving body.

This configuration utilizes the fact that the relation between the incident angle and the reflection intensity is different for every type of the underwater moving body (e.g., fish type). Such a relation can be used for display purposes or for further processing such as underwater moving body identification (e.g., fish type identification) purposes.


**Brief Description of the Drawings**

The present disclosure is illustrated by way of example and not by way of limitation in the figures of the accompanying drawings, in which the like reference numeral indicate like elements and in which:

Fig. 1 is a block diagram showing a configuration of an underwater detecting device 1 according to an embodiment of the invention;

Fig. 2 is a flowchart showing an overall processing flow of identifying a type of fish, which is performed by a calculation processing unit 14 of the underwater detecting device 1;

Fig. 3 is a view for explaining a concept of detecting a postural angle;

Fig. 4 is a view for explaining a concept of detecting an inclined angle and an incident angle;

Fig. 5 is a view showing a concept of setting the incident angle;

Fig. 6 is a flowchart showing a fish type identification flow;

Fig. 7 is a chart showing an example of an incident angle characteristic of reflection intensities TS;

Fig. 8 is a chart showing an example of each template characteristic curve (reflection intensity TS vs. incident angle) for every fish type (normalized characteristic curve);

Fig. 9 is a chart showing an example of a screen image;

Fig. 10 is a chart showing another example of a screen image; and

Fig. 11 is a chart showing further another example of a screen image.

## Detailed Description

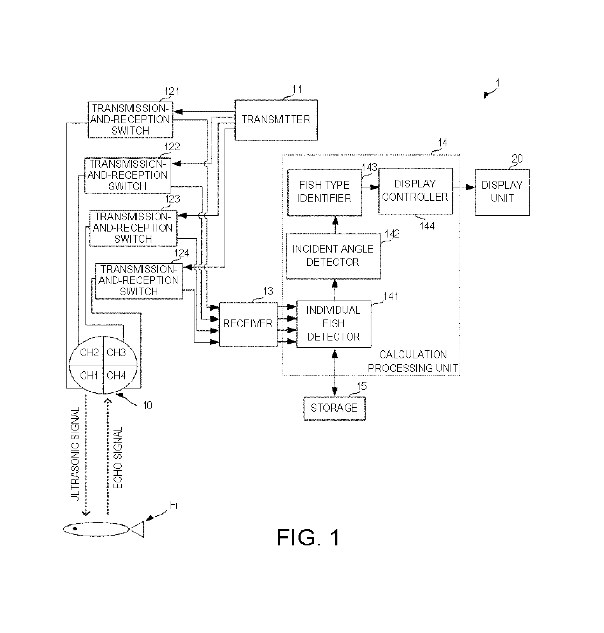

Device, method and program for detecting underwater according to an embodiment of the invention are explained with reference to the appended drawings. Fig. 1 is a block diagram showing a configuration of an underwater detecting device 1 of this embodiment.

The underwater detecting device 1 includes a transducer 10, a transmitter 11, transmission-and-reception switches 121, 122, 123 and 124, a receiver 13, a calculation processing unit 14, a storage 15, and a display unit 20. Note that, the display unit 20 is not necessarily provided to the underwater detecting device 1, and an external display unit connected with an external connecting terminal of the underwater detecting device 1 may alternatively be used.

The transducer 10 is fixedly installed to a bottom of a ship. The transducer 10 transmits underwater ultrasonic signals based on transmission signals supplied from the transmitter 11 (transmission signal generator) via the transmission-and-reception switches 121, 122, 123 and 124. Further, the transducer 10 receives echoes that are the ultrasonic signal reflected on a detection target object, such as an individual fish Fi, and outputs the echo signals to the receiver 13 (reception signal generator) via the transmission-and-reception switches 121, 122, 123 and 124.

Further specifically, the transducer 10 has the following structure.

The transducer 10 is constituted with a predetermined number of oscillators integrated into a bundle (not illustrated in detail). The oscillators are arranged so that oscillating faces of the oscillators are aligned in a predetermined pattern in a plane. A transmitting-and-receiving face of the transducer 10 is circumferentially divided into four so that the divided faces are set to channels CH1, CH2, CH3 and CH4, respectively. The channels CH1, CH2, CH3 and CH4 have a common directive property and, particularly, a predetermined direction width of, for example, 7°.

The transducer 10 transmits the ultrasonic signals at a predetermined directivity from the entire transmitting-and-receiving face. The transducer 10 receives the echoes from one or more individual fish Fi by the channels CH1-CH4.

A relation between the channels CH1-CH4 and a ship azimuth is as follows: the channels CH1 and CH4 are on a fore side and the channels CH2 and CH3 are on an aft side so that the transducer 10 can receive echoes within the respective direction width from a direction within a range between the fore and aft, and the channels CH1 and CH2 are on a starboard side and the channels CH3 and CH4 are on a port side so that the transducer 10 can receive echoes from a direction within a range between the starboard and port.

The transmitter 11 generates FM (frequency modulation) transmission signals. The transmitter 11 generates each transmission signal by chirping a frequency within a predetermined range for a predetermined transmission time period (e.g., some tens of $\mu$ seconds). For example, a central frequency of the transmitter 11 is 100 KHz, a lowest frequency is 70 KHz, and a highest frequency is 130 KHz, and the transmitter 11 generates the transmission signal of which the frequency is chirped from the lowest frequency to the highest frequency.

The transmitter 11 outputs the transmission signals to the transmission-and-reception switches 121-124.

The transmission-and-reception switches 121-124 are installed to connect with the oscillators constituting the channels CH1-CH4 of the transducer 10, respectively. The transmission-and-reception switches 121-124 output the transmission signals to the transducer 10 and output the echo signals received by the channels CH1-CH4 to the receiver 13.

The receiver 13 includes, for example, an LNA, and amplifies the echo signals by a predetermined gain, for every channel. The echo signal for every channel is inputted to the calculation processing unit 14.

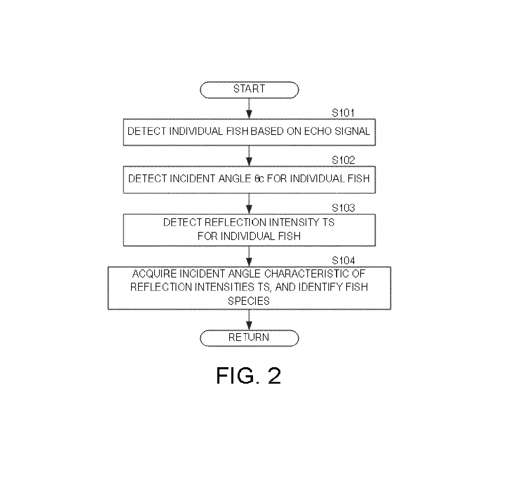

The calculation processing unit 14 is constituted with, for example, a micro computer, and functions as an individual fish detector 141, an incident angle detector 142, a fish type identifier 143, and a display controller 144 by executing a control program stored in the storage 15. Fig. 2 is a flowchart showing an overall processing flow of identifying a type of fish, which is performed by the calculation processing unit 14. Note that, the term "type of fish" or "fish type" used herein refers to a fish species, and may also be used when, for example, identifying based on size even if the fish species is the same.

The individual fish detector 141 has a function for Step S101 in Fig. 2, and detects an individual fish based on the echo signal. The individual fish detector 141 acquires echo data serving as intensity data discretized in a depth direction (time direction), by sampling the echo signal at predetermined sampling cycles. The individual fish detector 141 arranges the echo data by transmission timing (for every ping), and determines the echo data above a predetermined threshold as a reflection echo from the individual fish.

The individual fish detector 141 detects a position of the individual fish in an SSBL (Super Short Baseline) method using a known split beam. In this method, the individual fish Fi can be detected at a high resolution and therefore, the position of the individual fish Fi within a school of fish can be measured. The detection of the individual fish Fi and the position detection processing are performed at every predetermined observation timing (e.g., for every ping).

The individual fish detector 141 stores the calculated position of the individual fish Fi sequentially in the depth direction and a ping direction. Here, the incident angle detector 142 links (associates) the observed positions with each other for every individual fish Fi and stores them therein.

Specifically, for example, the individual fish detector 141 determines the echo data above the predetermined threshold that continues in the depth direction of the same ping, as an echo data group acquired from the individual fish. Further, based on a transmission interval and a beam width of the ultrasonic signal, when the echo data above the predetermined threshold is obtained continuously for a plurality number of adjacent pings, the individual fish detector 141 stores the continuous echo data as echo data obtained from one individual fish.

The individual fish detector 141 stores as individual fish information, information containing a ping position and a depth of the echo data at a shallowest position in the echo data group determined as the individual fish.

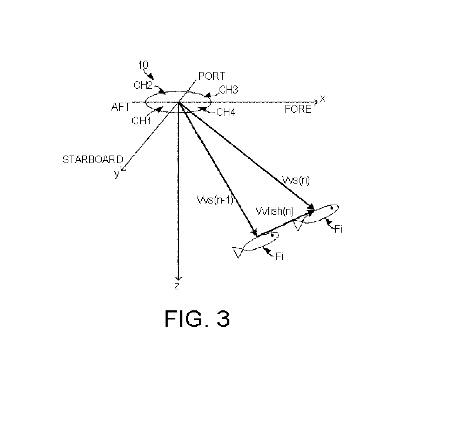

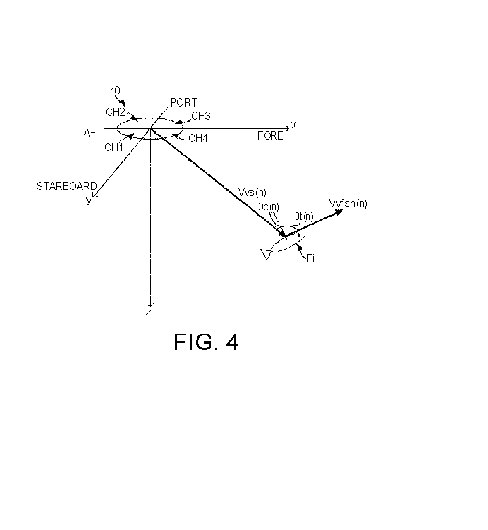

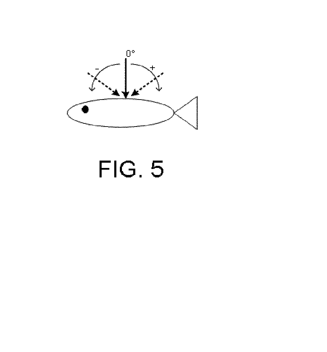

The incident angle detector 142 has a function for Step S102 in Fig. 2, and detects incident angles of the ultrasonic signal for every detected individual fish. Note that, the incident angle means an angle at which the ultrasonic signal from the transducer 10 intersects with the individual fish Fi, and is the same as a reflection angle of the echo signal obtained from reflecting on the individual fish Fi. Therefore, as described later, the incident angle can be calculated based on the echo signal. Fig. 3 is a view for explaining a concept of detecting a postural angle. Fig. 4 is a view for explaining a concept of detecting an inclined angle and the incident angle. Fig. 5 is a view showing a concept of setting the incident angle.

Based on the individual fish information, the incident angle detector 142 tracks the position of the individual fish. Specifically, based on the echo data in the channels CH1-CH4 for the ping position and the depth of the shallowest echo data determined to be from the individual fish, the incident angle detector 142 calculates a three-dimensional position of the individual fish Fi (x(n), y(n), z(n)) at a fish type determining timing n. The three-dimensional coordinates used here is defined by an x-axis having a direction toward the fore from the aft as its positive direction, a y-axis having a direction toward the starboard from the port as its positive direction, and a z-axis having a direction toward a water bottom from a bottom face of the transducer 10 (depth direction) as its positive direction.

The incident angle detector 142 acquires an individual fish positional vector Vvs(n)={x(n), y(n), z(n)} of which a starting point (origin) is the centre of the bottom face of the transducer 10 and a terminal point is the position of the individual fish Fi (x(n), y(n), z(n)).

An individual fish positional vector Vvs(n-1) is acquired at a fish type determining timing n-1 with a similar setting, the timing being earlier by a predetermined time period than the fish type determining timing n for acquiring the individual fish positional vector Vvs(n). The incident angle detector 142 calculates an individual fish swimming vector Vvfish(n) by using the individual fish positional vector Vvs(n-1) and the individual fish positional vector Vvs(n) based on Equation 1 that is a vector operational equation. Note that, an interval between the subsequent fish type determining timings is suitably set according to the transmission interval of the ultrasonic signal (interval between pings) and a moving speed of fish to be a target for the fish type identification.

$$ \mathrm{Vvfish\ (n)} = \mathrm{Vvs\ (n)} - \mathrm{Vvs\ (n-1)} \quad \ldots (1) $$

The incident angle detector 142 calculates the postural angle θp based on the individual fish swimming vector Vvfish(n) based on Equation 2 that is a vector operational equation.

$$ \theta p(n) = \frac{\pi}{2} - \cos^{-1}\left[ \frac{\mathrm{ABS}[z(n) - z(n-1)]}{\mathrm{ABS}[\mathrm{Vvfish}(n)]} \right] \quad \ldots (2) $$

The postural angle θp obtained from this operation processing has the same value as the incident angle θc when the individual fish or the school of fish to serve as the fish type identification target exists near right beneath the transducer 10. Therefore, when the fish type existing in a predetermined area near right beneath the transducer 10 is to be identified, the incident angle detector 142 outputs the postural angle θp as the incident angle θc.

However, if the position of the individual fish or the school of fish is not in the predetermined area, the incident angle detector 142 calculates the incident angle θc by using a method described as follows.

First, the incident angle detector 142 calculates the inclined angle θt defined by a radiating direction toward the target individual fish Fi and a swimming direction of the individual fish (see Fig. 4).

As shown in Fig. 4, the inclined angle θt is defined by the individual fish positional vector Vvs(n) and the individual fish swimming vector Vvfish(n), and can be calculated based on Equation 3.

$$\theta t(n) = \pi - \cos^{-1}\left[\frac{Vvfish(n) \bullet Vvs(n)}{ABS[Vvfish(n)]ABS[Vvs(n)]}\right] \quad ... (3)$$

Note that, in Equation 3, the black dot indicates an inner product of the vector.

The calculated inclined angle θt has the swimming direction as 0° (0 rad). On the other hand, as shown in Fig. 5, the incident angle θc has the direction orthogonal to a back of the individual fish Fi as 0° (0 rad). Therefore, the inclined angle θt and the incident angle θc have the following relation therebetween: θc= θt-π/2 [rad].

Therefore, the incident angle θc can be calculated based on the following equation.

$$\theta c(n) = \frac{\pi}{2} - \cos^{-1}\left[\frac{Vvfish(n) \bullet Vvs(n)}{ABS[Vvfish(n)]ABS[Vvs(n)]}\right] \quad ... (4)$$

In this manner, even if the position of the individual fish Fi is not in the predetermined area, the incident angle detector 142 can output the incident angle θc of the detected individual fish Fi.

With the method of using Equation 4, the incident angle θc can be calculated highly accurately when, strictly, the individual fish Fi exists near an x-z plane (plane formed by the fore-aft direction and the vertical direction) and the individual fish Fi hardly has a motion component in the y-axis (port-starboard direction). Therefore, if the individual fish Fi exists at a position separated from the x-z plane along the y-axis, an error may be caused in the calculation.

However, for example, by converting the individual fish positional vector Vvs and the individual fish swimming vector Vvfish into planar vectors through projecting them in the x-z plane, and by the calculation based on Equation 4 using the planar vectors, the incident angle θc can be calculated highly accurately.

Further, similarly, with the method of using Equation 4, strictly, when the individual fish Fi exists near an y-z plane (plane formed by the port-starboard direction and the vertical direction) and the individual fish Fi hardly has a motion component in the x-axis (fore-aft direction), the incident angle θc can be calculated highly accurately. Therefore, if the individual fish Fi exists at a position separated from the y-z plane along the x-axis, an error may be caused in the calculation.

However, for example, by converting the individual fish positional vector Vvs and the individual fish swimming vector Vvfish into planar vectors through projecting them in the y-z plane, and by the calculation based on Equation 4 using the planar vectors, the incident angle θc can be calculated highly accurately.

As shown in Fig. 5, the incident angle θc thus calculated is defined so that a direction orthogonal to the back of the individual fish Fi is 0°, an angle inclined toward the head thereof is a negative angle, and an angle inclined toward the tail thereof is a positive angle.

Note that, any of the methods of calculating the incident angle θc may be used according to the situation, and may be combined as needed. For example, when the fish type identification is performed for a narrow area near right beneath the transducer 10, by using the method of setting the postural angle θp obtained based on Equation 2 as the incident angle θc, the calculation processing can be simplified. Further, when the fish type identification is performed for a wide area around right beneath the transducer 10, by using the incident angle θc obtained based on Equation 4, the fish type can be identified further highly accurately.

Alternatively, when the fish type identification is performed for the wide area around right beneath the transducer 10, Equation 2 may be used for the area corresponding to the narrow area near right beneath the transducer 10, and Equation 4 may be used for the area other than the narrow area.

Such detection of the incident angle θc is executed for each acquired individual fish.

The fish type identifier 143 has functions for Steps S103 and S 104 in Fig. 2, and identifies the fish type by using the incident angle θc calculated for each detected individual fish.

The fish type identifier 143 calculates reflection intensities TS (Target Strength) by the known method, in the other words, by using representative echo data among all the echo data corresponding to the individual fish. For example, the representative echo data is a maximum value in an echo amplitude waveform of the individual fish. The reflection intensities TS are calculated for each detected individual fish. Note that, the calculation of the reflection intensities TS may be performed at any timing after the individual fish is detected. Thus, it may be before the incident angle is detected.

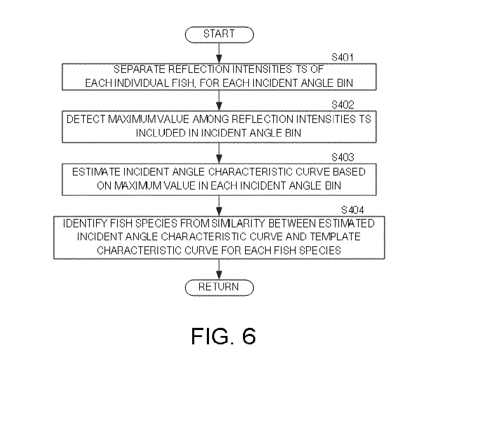

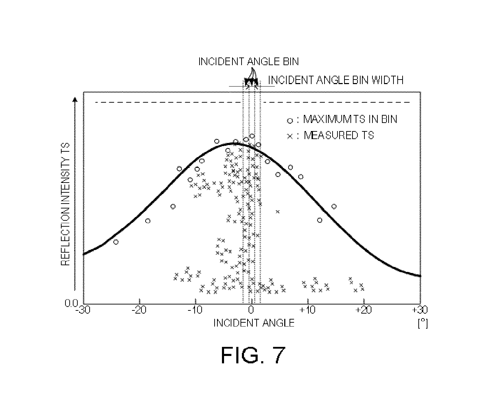

The fish type identifier 143 identifies the fish type based on the reflection intensities TS and the incident angles θc for each detected individual fish. Fig. 6 is a flowchart showing a fish type identification flow. Fig. 7 is a chart showing an example of an incident angle characteristic of the reflection intensities TS. In Fig. 7, each "o" indicates a maximum value among the reflection intensities TS in each incident angle bin, and each "x" indicates the reflection intensity TS other than the maximum value. Note that, not all the maximum values are indicated by the "o" marks, and some of them are not illustrated in Fig. 7 for clarifying the characteristics of this embodiment.

The fish type identifier 143 sets an incident angle range for the fish type identification (in the example shown in Fig. 7, -30° to 30°), and divides it for a plurality of incident angle bins. For example, the fish type identifier 143 sets the incident angle range between -30° to 30° divided for each incident angle bin having 2° in its angle width.

The fish type identifier 143 separates the reflection intensities TS of each acquired individual fish for every incident angle bin (S401). The fish type identifier 143 detects the maximum value among the reflection intensities TS in every incident angle bin (S402).

The fish type identifier 143 estimates an incident angle characteristic curve of the reflection intensity (the solid line in Fig. 7) based on the maximum values in the incident angle bins (S403). Here, for example, the fish type identifier 143 fitting processes the maximum values by using a predetermined function so as to estimate the incident angle characteristic curve.

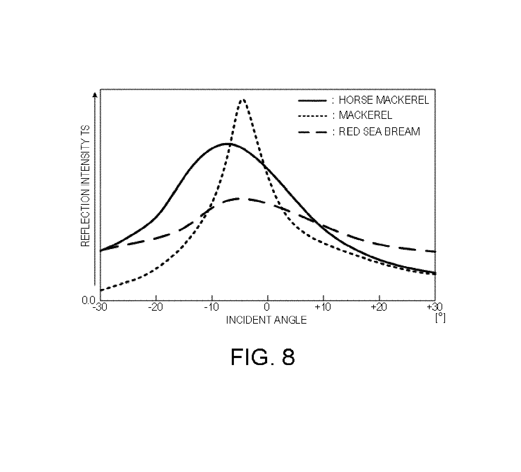

Fig. 8 is a chart showing an example of each template characteristic curve (normalized characteristic curve) of the incident angle of the reflection intensity TS for every fish type. The fish type identifier 143 compares the estimated incident angle characteristic curve with each template characteristic curve of the reflection intensity TS for every fish type based on the incidence angle.

As shown in Fig. 8, the incident angle characteristic of the reflection intensities TS has a characteristic for every fish type. For example, in a case of a horse mackerel, the characteristic has a gradually sloped maximum area on a side of negative incident angle (below 0°). Further, in a case of a mackerel, the characteristic has a steeply sloped maximum area on the negative incident angle side close to 0°. Further, in a case of a red sea bream, although the characteristic has a slightly sloped maximum area between the incident angles of -30° and 30°, it is entirely flat compared to the horse mackerel and the mackerel. Note that, the incident angle characteristics of the reflection intensities TS for the horse mackerel, the mackerel, and the red sea bream are calculated by transmitting the ultrasonic signals to horse mackerel, mackerel, and red sea bream in fish-tanks, and performing the individual fish detection, the incident angle detection, and the reflection intensity TS calculation so as to obtain the maximum value among the reflection intensities TS for every incident angle.

The fish type identifier 143 normalizes the incident angle characteristic curve and calculates a similarity between the normalized incident angle characteristic curve and each template characteristic curve shown in Fig. 8 to determine the fish type (S404). For example, the fish type identifier 143 calculates Euclidean distances between the incident angle characteristic curve and the respective template characteristic curves shown in Fig. 8.

Further specifically, the fish type identifier 143 calculates an Euclidean distance d(TS, TST) by using a value TSj of the reflection intensity TS of the estimated incidence angle and a value TSTj of the reflection intensity of the template characteristic curve at a central angle of an incident angle bin j, based on the following equation. Note that, "j" indicates, when the incidence angle bins are aligned sequentially toward larger angle, an aligned number of the incident angle bin to be used in the fish type identification, and j=1 to N ("N" is the total number of incident angle bins to be used in the fish type identification).

$$d\big(TS, TST\big) = \sqrt{\sum_{j=1}^{N} \big(TSj - TSTj\big)^2}$$

The fish type identifier 143 determines that the template characteristic curve with the shortest Euclidean distance is most similar to the incident angle characteristic curve, and selects the fish type corresponding to the template characteristic curve with the shortest Euclidean distance.

Further, the fish type identifier 143 determines the selected fish type as the type of the detected individual fish and the school of fish including thereof. For example, when the incident angle characteristic curve in Fig. 7 is obtained, the detected individual fish and the school of fish including thereof is determined as "horse mackerel."

As above, with the configuration and the processing of this embodiment, the fish type can accurately be determined.

The display controller 144 of the calculation processing unit 14 converts the name of the acquired fish type and the incident angle characteristic of the reflection intensities TS shown in Fig. 7 into an image data, and outputs it to the display unit 20. Here, the display controller 144 (not illustrated in detail) may form an image data by superimposing the name of the fish type and the incident angle characteristic of the reflection intensities TS on a detection image defined by the two-dimensional (ping and depth) coordinates, which is obtained by a known method. The display unit 20 displays the image data from the display controller 144 on a screen thereof.

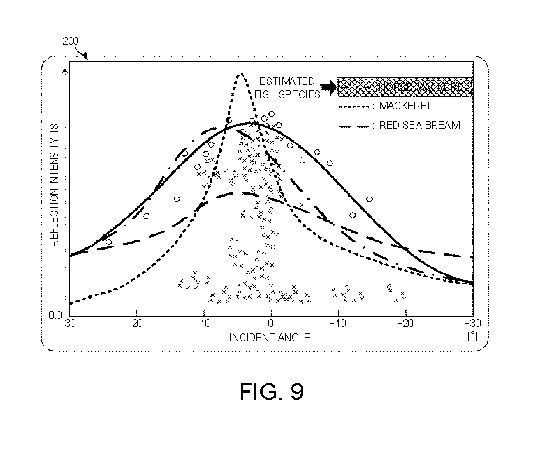

Fig. 9 is a chart showing an example of the display image. As shown in Fig. 9, an incident angle distribution of the reflection intensities TS acquired from the echo signals is displayed by specific marks ("x" and "o" marks in Fig. 9) in a screen image 200. Further, the incident angle characteristic curve and the template characteristic curves for the fish type are displayed in the screen image 200. Moreover, the estimated fish type is displayed in an emphasized manner in the screen image 200 (in Fig. 9, the name of the estimated fish type is hatched). By displaying such a screen image 200, a user can easily identify the type of the detected school of fish and individual fish.

Note that, in Fig. 9, the example of displaying only the image for the fish type identification is shown; however, a normal echo image, that is an echo image defined by the two-dimensional (ping and depth) coordinates, and the image for the fish type identification may be displayed simultaneously.

Note that, in the explanation above, the example of identifying the fish type based on the reflection intensities TS from the plurality of individual fish is described; however, the fish type can be identified if at least two sets of the incident angle $\theta c$ and the reflection intensity TS can be detected. In this case, a plurality of sets of incident angle $\theta c$ and the reflection intensity TS may be acquired from the plurality number of individual fish contained in the same school of fish, or from one individual fish with a predetermined time interval. Particularly, in the case of acquiring the sets from one individual fish, the fish type can be identified even while the plurality number of individual fish are swimming individually and not as a school of fish.

Further, in the explanation above, the example of determining the fish type based on the similarity in characteristic curve is described; however, the similarity may be detected in a different method.

For example, the similarity may be detected by using a full width at half maximum (FWHM) of the characteristic curve. Thus, the fish type corresponding to a template characteristic formed with a full width at half maximum most closest to that of the incident angle characteristic of the calculated reflection intensities TS is determined as the type of the detected individual fish and the school of fish including thereof.

Alternatively, as another method, for example, the full width at half maximum of the characteristic curve and the maximum value thereof are calculated and an index value indicating an expanse on the incident angle axis, of the reflection intensities TS acquired therefrom is calculated. For example, calculation processing of dividing the full width at half maximum by the maximum value is performed. Further, a reference index value obtained by a similar calculating method is acquired for every fish type and a potential reference index value range is set for every fish type in advance. Subsequently, the reference index value range to which the index value acquired from the echo signal corresponds is determined. The fish type corresponding to the reference index value range including the index value is determined as the type of the school of fish and the individual fish detected by the corresponding echo signal.

Note that, in the above explanation, the example of detecting the maximum value among the reflection intensities TS for every incident angle bin and setting the representative value for every incident angle bin is described; however, different types of values, such as an average value, a median value, and a centre value, may be calculated as the representative value for every incident angle bin and may be used in the fish type identification.

In the case of using the average value, all the reflection intensities TS in the incident angle bin are added to each other, and it is divided by the number of the acquired reflection intensities TS.

In the case of using the median value, all the reflection intensities TS in the incident angle bin are aligned in the order from smallest intensity to largest intensity, and the midmost reflection intensity TS is used. For example, when the total number of the reflection intensities TS is five, the third reflection intensity TS from the top is used.

In the case of using the centre value, maximum and minimum values among all the reflection intensities TS in the incident angle bin are calculated, and the maximum and minimum values are added and divided by two.

Further, in the above explanation, the position of the individual fish is detected in the SSBL method using the split beam; however, a different method using, for example, a sonar may also be used as long as it can detect a three-dimensional position.

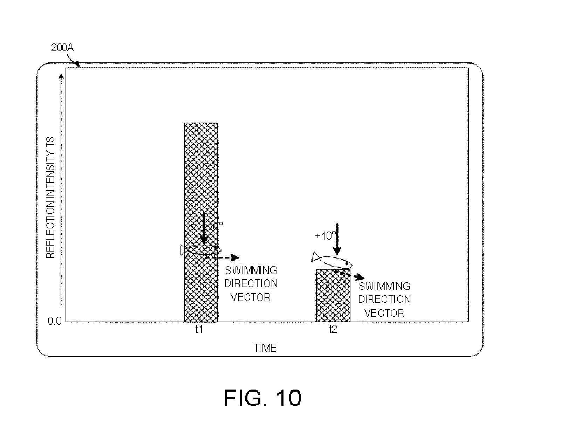

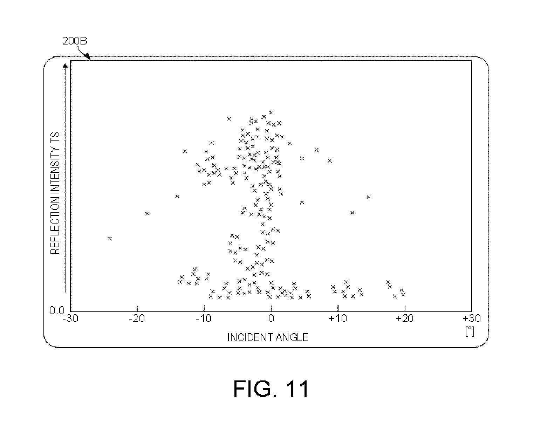

Furthermore, in the above explanation, the example of the underwater detection device for performing also the fish type identification is described; however, the device can also be used as a device for displaying information useful in the fish type identification. In this case, the fish type discriminator 143 may be omitted and only the relations between the incident angle $\theta c$ and the reflection intensity TS is inputted to the display controller 144. Fig. 10 is a chart showing another example of a screen image. Fig. 11 is a chart showing further another example of a screen image.

A screen image 200A shown in Fig. 10 is formed when the relation between the incident angle $\theta c$ and the reflection intensity TS is acquired from the same individual fish at a plurality of different time points t1 and t2. The reflection intensities TS for each of the time points t1 and t2 are displayed in the screen image 200A in a manner of bar graph and further, the incident angle $\theta c$ at each of the time points t1 and t2 is also schematically and numerically displayed therein. Note that, although the individual fish swimming vectors (swimming direction) of the individual fish for the time points t1 and t2 are displayed in the screen image 200A in Fig. 10 for easier understanding, they may be omitted. Further, this displaying method is merely an example and it may be different as long as the relations between the reflection intensity TS and the incident angle θc obtained at a plurality of different time points are illustrated.

A screen image 200B shown in Fig. 11 is formed when a plurality number of individual fish is detected at the same time point and the relations between the incident angle θc and the reflection intensity TS are acquired from the plurality number of individual fish. A dispersion chart in which the horizontal axis indicates the incident angle θc and the vertical axis indicates the reflection intensity TS is displayed in the screen image 200B. The "x" marks in the chart indicate the positions of the sets of the detected incident angle θc and the reflection intensity TS, respectively. Note that, this displaying method is merely an example and it may be different as long as the relations between the reflection intensity TS and the incident angle θc obtained from a plurality number of individual fish at the same time point are illustrated.

Further, in the above explanation, the example of calculating the reflection intensity based on the maximum value of the echo signals is described, specifically, the reflection intensity is calculated in any one of the following methods.

The reflection intensity is calculated based on an integrated value obtained from integrating for a predetermined time period, values of the echo signals of the detected individual fish Fi.

Alternatively, the reflection intensity is calculated by acquiring a frequency spectrum of the echo signals of the detected individual fish Fi, and based on a maximum value of the frequency spectrum.

Alternatively, the reflection intensity is calculated by acquiring a frequency spectrum of the echo signals of the detected individual fish Fi, and based on an average value of the frequency spectrum.

Moreover, in the above explanation, the example of detecting the individual fish as a target is described; however, the above configuration and processing may be applied to other underwater moving bodies.

**Claims**

1. An underwater detection device (1), comprising:

   a transceiver (10, 11, 121-124, 13) configured to transmit an ultrasonic signal underwater to receive an echo signal caused by a reflection of the ultrasonic signal from an underwater moving body ($F_i$); and
   an underwater moving body detector (141) configured to detect, based on the echo signal, an incident angle (θc) of the ultrasonic signal with respect to the underwater moving body, a reflection intensity (TS) of the echo signal reflected on the underwater moving body, and an existence of the underwater moving body ($F_i$) based on the reflection intensity (TS);
   **characterised in that** the device comprises an identifier (143) configured to identify a type of the underwater moving body ($F_i$) based on a plurality of relations between the incident angle (θc) and the reflection intensity (TS), wherein the detector (141,142) comprises:

   an incident angle detector (142) configured to detect the incident angle (θc) based on a position of the underwater moving body (Fi); and
   wherein the identifier (143) is configured to identify the type of underwater moving body (Fi) based on a distribution of a plurality of reflection intensities (TS) on an incident angle axis.

2. A device according to claim 1, wherein the incident angle detector (142) is configured to detect the incident angle (θc) based on a plurality of positions of the underwater moving body (Fi) detected at a plurality of timings.

3. A device according to claim 1 or claim 2, wherein the incident angle detector (142) includes an identifying information creator configured to create sets of incident angle reflection intensity (TS) by calculating the reflection intensities from the underwater moving body (Fi) and associating the reflection intensities with the incident angles (θc) of the underwater moving body.

4. A device according to any of the preceding claims, further comprising a display unit (20) for displaying a plurality of relations between the incident angle (θc) and the reflection intensity (TS).

5. A device according to claim 4, wherein the incident angle detector (142) is configured to acquire the relation between the incident angle (θc) and the reflection intensity (TS) at a plurality of time points, and the display unit (20) is configured to display simultaneously the relations acquired at the plurality of time points.

6. A device according to claim 4, wherein the incident angle detector (142) is configured to acquire a plurality of relations between the incident angle (θc) and the reflection intensity (TS) at a same time point, and the display unit (20) is configured to display the relations simultaneously.

7. A device according to any of the preceding claims, wherein the identifier (143) is configured to divide the incident angle axis into a plurality of incident angle bins having a predetermined incident angle width, and to acquire a distribution characteristic of the reflection intensities based on a representative value of the reflection intensities in each incident angle bin, and to identify the type of the underwater moving body based on the distribution characteristic.

8. A device according to claim 7, wherein the identifier (143) is configured to store a template of the distribution characteristic for every type of the underwater moving body ($F_i$), and to identify the type of the underwater moving body (Fi) based on a relation between the acquired distribution characteristic and the template.

9. A device according to claim 7 or claim 8, wherein the representative value is a maximum value or an average value or a centre value or a median value among the reflection intensities in the incident angle bin.

10. A device according to any claims 7 to 9, further comprising a display controller (144) configured to create image data based on at least one of the distribution of the plurality of the reflection intensities on an incident angle axis and the distribution characteristic.

11. A device according to any of the preceding claims, wherein the underwater moving body is an individual fish ($F_i$).

12. A device according to any of the preceding claims, wherein the incident angle is based on a normal direction of a moving direction of the underwater moving body ($F_i$).

13. An underwater detection method, comprising:

transmitting underwater an ultrasonic signal and receiving an echo signal caused by a reflection of the ultrasonic signal from an underwater moving body (Fi); and
detecting, based on the echo signal, an incident angle ($\theta c$) of the ultrasonic signal with respect to the underwater moving body ($F_i$), a reflection intensity (TS) of the echo signal reflected on the underwater moving body ($F_i$), and an existence of the underwater moving body (Fi) based on the reflection intensity (TS);
**characterised in that** the method comprises the further steps of
detecting the incident angle ($\theta c$) based on a position of the underwater moving body ($F_i$);
identifying a type of the underwater moving body (Fi) based on a plurality of relations between the incident angle ($\theta c$) and the refection intensity (TS), wherein the identification is based on a distribution of a plurality of reflection intensities on an incident angle axis.

14. A computer-readable program causing a computer to detect underwater, the program comprising:

causing the computer to transmit underwater an ultrasonic signal and receive an echo signal caused by a reflection of the ultrasonic signal from an underwater moving body (Fi); and
causing the computer to detect, based on the echo signal, an incident angle of the ultrasonic signal with respect to the underwater moving body ($F_i$), a reflection intensity (TS) of the echo signal reflected on the underwater moving body ($F_i$), and an existence of the underwater moving body (Fi) based on the reflection intensity (TS);
**characterised in that** the program also comprises
causing the computer to detect the incident angle ($\theta c$) based on a position of the underwater moving body ($F_i$);
causing the computer to identify a type of the underwater moving body (Fi) based on a plurality of relations between the incident angle ($\theta c$) and the reflection intensity (TS), wherein the identification is based on a distribution of a plurality of reflection intensities on an incident angle axis.

**Patentansprüche**

1. Vorrichtung zur Unterwasserortung (1), umfassend:

ein Sende-Empfangsgerät (10, 11, 121-124, 13), das so konfiguriert ist, dass es unter Wasser ein Ultraschallsignal sendet, um ein Echosignal zu empfangen, das durch eine Reflexion des Ultraschallsignals von einem sich unter Wasser bewegenden Körper ($F_i$) hervorgerufen wird; und
einen Detektor für einen sich unter Wasser bewegenden Körper (141), der so konfiguriert ist, dass er, basierend auf dem Echosignal, einen Einfallswinkel ($\theta c$) des Ultraschallsignals in Bezug auf den sich unter Wasser bewegenden Körper, eine Reflexionsintensität (TS) des Echosignals, das auf dem sich unter Wasser bewegenden Körper reflektiert wird, und das Vorliegen des sich unter Wasser bewegenden Körpers ($F_i$) basierend auf der Reflexionsintensität (TS) detektiert; **dadurch gekennzeichnet, dass**

die Vorrichtung einen Identifikator (143) umfasst, der so konfiguriert ist, dass er die Art des sich unter Wasser bewegenden Körpers ($F_i$) basierend auf einer Vielzahl von Beziehungen zwischen dem Einfallswinkel ($\theta c$) und der Reflexionsintensität (TS) identifiziert; wobei der Detektor (141, 142) folgendes umfasst:

einen Detektor für den Einfallswinkel (142), der so konfiguriert ist, dass er den Einfallswinkel ($\theta c$) basierend auf einer Position des sich unter Wasser bewegenden Körpers ($F_i$) detektiert; und

wobei der Identifikator (143) so konfiguriert ist, dass er die Art des sich unter Wasser bewegenden Körpers ($F_i$) basierend auf der Verteilung einer Vielzahl von Reflexionsintensitäten (TS) auf einer Achse des Einfallswinkels identifiziert.

2. Vorrichtung nach Anspruch 1, wobei der Detektor für den Einfallswinkel (142) so konfiguriert ist, dass er den Einfallswinkel ($\theta c$) basierend auf einer Vielzahl von Positionen des sich unter Wasser bewegenden Körpers ($F_i$), die an einer Vielzahl von Zeitpunkten detektiert wurden, detektiert.

3. Vorrichtung nach Anspruch 1 oder 2, wobei der Detektor für den Einfallswinkel (142) eine Vorrichtung zur Erzeugung von Identifikationsinformationen einschließt, die so konfiguriert ist, dass sie Gruppen von Reflexionsintensitäten des Einfallswinkels (TS) erzeugt, indem die Reflexionsintensitäten von dem sich unter Wasser bewegenden Körpers ($F_i$) berechnet werden und die Reflexionsintensitäten den Einfallswinkeln ($\theta c$) des sich unter Wasser bewegenden Körpers zugeordnet werden.

4. Vorrichtung nach einem der vorhergehenden Ansprüche, ferner eine Anzeigeeinheit (20) umfassend, um die Vielzahl von Beziehungen zwischen dem Einfallswinkel ($\theta c$) und der Reflexionsintensität (TS) darzustellen.

5. Vorrichtung nach Anspruch 4, wobei der Detektor für den Einfallswinkel (142) so konfiguriert ist, dass er die Beziehung zwischen dem Einfallswinkel ($\theta c$) und der Reflexionsintensität (TS) an einer Vielzahl von Zeitpunkten erfasst, und die Anzeigeeinheit (20) so konfiguriert ist, dass sie gleichzeitig die erfassten Beziehungen, die an der Vielzahl von Zeitpunkten erfasst wurden, darstellt.

6. Vorrichtung nach Anspruch 4, wobei der Detektor für den Einfallswinkel (142) so konfiguriert ist, dass er die Vielzahl der Beziehungen zwischen dem Einfallswinkel ($\theta c$) und der Reflexionsintensität (TS) zum gleichen Zeitpunkt erfasst, und die Anzeigeeinheit (20) so konfiguriert ist, dass sie die Beziehungen gleichzeitig darstellt.

7. Vorrichtung nach einem der vorhergehenden Ansprüche, wobei der Identifikator (143) so konfiguriert ist, dass er die Achse des Einfallswinkels in eine Vielzahl von Kästen mit Einfallswinkeln teilt, die eine vorbestimmte Breite des Einfallswinkels aufweisen, und die Verteilungscharakteristik der Reflexionsintensitäten basierend auf einem repräsentativen Wert der Reflexionsintensitäten in jedem Kasten mit den Einfallswinkeln erfasst, und die Art des sich unter Wasser bewegenden Körpers basierend auf der Verteilungscharakteristik identifiziert.

8. Vorrichtung nach Anspruch 7, wobei der Identifikator (143) so konfiguriert ist, dass er ein Muster der Verteilungscharakteristik für jede Art des sich unter Wasser bewegenden Körpers ($F_i$) speichert, und die Art des sich unter Wasser bewegenden Körpers ($F_i$) basierend auf der Beziehung zwischen der erfassten Verteilungscharakteristik und dem Muster identifiziert.

9. Vorrichtung nach Anspruch 7 oder 8, wobei der repräsentative Wert ein Maximalwert oder ein Durchschnittswert oder ein mittlerer Wert oder ein Medianwert unter den Reflexionsintensitäten in dem Kasten mit den Einfallswinkeln ist.

10. Vorrichtung nach einem der Ansprüche 7 bis 9, ferner eine Anzeigesteuerung (144) umfassend, die so konfiguriert ist, dass sie Bilddaten basierend auf zumindest der Verteilung der Vielzahl der Reflexionsintensitäten auf der Achse des Einfallswinkels und der Verteilungscharakteristik erzeugt.

11. Vorrichtung nach einem der vorhergehenden Ansprüche, wobei der sich unter Wasser bewegende Körper ein einzelner Fisch ($F_i$) ist.

12. Vorrichtung nach einem der vorhergehenden Ansprüche, wobei der Einfallswinkel auf einer normalen Richtung einer Bewegungsrichtung des sich unter Wasser bewegenden Körpers ($F_i$) basiert.

**13.** Verfahren zur Unterwasserortung, umfassend:

Senden unter Wasser eines Ultraschallsignals und Empfangen eines Echosignals, dass durch eine Reflexion des Ultraschallsignals von einem sich unter Wasser bewegenden Körper ($F_i$) hervorgerufen wird; und Detektieren, basierend auf dem Echosignal, eines Einfallswinkels ($\theta c$) des Ultraschallsignals in Bezug auf den sich unter Wasser bewegenden Körper ($F_i$), einer Reflexionsintensität (TS) des Echosignals, das auf dem sich unter Wasser bewegenden Körper ($F_i$) reflektiert wird, und des Vorliegens des sich unter Wasser bewegenden Körpers ($F_i$), basierend auf der Reflexionsintensität (TS); **dadurch gekennzeichnet, dass** das Verfahren ferner folgende Schritte umfasst:

Detektieren des Einfallswinkels ($\theta c$) basierend auf einer Positionen des sich unter Wasser bewegenden Körpers ($F_i$); Identifizieren der Art des sich unter Wasser bewegenden Körpers ($F_i$) basierend auf einer Vielzahl von Beziehungen zwischen dem Einfallswinkel ($\theta c$) und der Reflexionsintensität (TS), wobei die Identifizierung auf der Verteilung einer Vielzahl von Reflexionsintensitäten auf der Achse des Einfallswinkels basiert.

**14.** Computerlesbares Programm, das bewirkt, dass ein Computer eine Unterwasserortung durchführt, wobei das Programm folgendes umfasst:

Bewirken, dass der Computer unter Wasser ein Ultraschallsignal sendet und ein Echosignal empfängt, dass durch eine Reflexion des Ultraschallsignals von einem sich unter Wasser bewegenden Körper ($F_i$) hervorgerufen wird; und Bewirken, dass der Computer, basierend auf dem Echosignal, einen Einfallswinkel ($\theta c$) des Ultraschallsignals in Bezug auf den sich unter Wasser bewegenden Körper ($F_i$), die Reflexionsintensität (TS) des Echosignals, das auf dem sich unter Wasser bewegenden Körper ($F_i$) reflektiert wird, und das Vorliegen des sich unter Wasser bewegenden Körpers ($F_i$), basierend auf der Reflexionsintensität (TS), detektiert; **dadurch gekennzeichnet, dass** das Programm ebenso folgendes umfasst:

Bewirken, dass der Computer den Einfallswinkel ($\theta c$) basierend auf der Position des sich unter Wasser bewegenden Körpers ($F_i$) detektiert, Bewirken, dass der Computer die Art des sich unter Wasser bewegenden Körpers ($F_i$) basierend auf einer Vielzahl von Beziehungen zwischen dem Einfallswinkel ($\theta c$) und der Reflexionsintensität (TS) identifiziert, wobei die Identifizierung auf der Verteilung einer Vielzahl von Reflexionsintensitäten auf der Achse des Einfallswinkels basiert.

## Revendications

**1.** Dispositif de détection sous-marine (1) comprenant
un transpondeur (10, 11, 121-124, 13) configuré pour transmettre sous l'eau un signal ultrasonique pour recevoir un signal d'écho causé par une réflexion du signal ultrasonique par un corps mobile sous-marin ($F_i$), et un détecteur de corps mobile sous-marin (141) configuré pour détecter, sur la base du signal d'écho, un angle incident ($\Theta c$) du signal ultrasonique par rapport au corps mobile sous-marin, une intensité de réflexion (TS) du signal d'écho réfléchi sur le corps mobile sous-marin et une existence du corps mobile sous-marin ($F_i$) sur la base de l'intensité de réflexion (TS),
**caractérisé en ce que** le dispositif comprend un identificateur (143) configuré pour identifier un type du corps mobile sous-marin ($F_i$) sur la base d'une pluralité de rapports entre l'angle incident ($\Theta c$) et l'intensité de réflexion (TS), le détecteur (141, 142) comprenant
un détecteur d'angle incident (142) configuré pour détecter l'angle incident ($\Theta c$) sur la base d'une position du corps mobile sous-marin ($F_i$), et
l'identificateur (143) étant configuré pour identifier le type de corps mobile sous-marin ($F_i$) sur la base d'une distribution d'une pluralité d'intensités de réflexion (TS) sur un axe d'angle incident.

**2.** Dispositif selon la revendication 1, **caractérisé en ce que** le détecteur d'angle incident (142) est configuré pour détecter l'angle incident ($\Theta c$) sur la base d'une pluralité de positions du corps mobile sous-marin ($F_i$) à une pluralité de moments.

**3.** Dispositif selon la revendication 1 ou 2, **caractérisé en ce que** le détecteur d'angle incident (142) comprend un générateur d'informations d'identification configuré pour créer des ensembles d'intensité de réflexion (TS) à angle d"incident en calculant les intensités de réflexion du corps mobile sous-marin ($F_i$) et en associant les intensités de réflexion aux angles incidents ($\Theta c$) du corps mobile sous-marin.

**4.** Dispositif selon l'une des revendications précédentes, comprenant en outre une unité d'affichage (20) pour afficher une pluralité de rapports entre l'angle incident ($\Theta c$) et l'intensité de réflexion (TS).

**5.** Dispositif selon la revendication 4, **caractérisé en ce que** le détecteur d'angle incident (142) est configuré pour obtenir le rapport entre l'angle incident ($\Theta c$) et l'intensité de réflexion (TS) à une pluralité de moments et **en ce que** l'unité d'affichage (20) est configurée pour afficher simultanément les rapports obtenus à la pluralité de moments.

**6.** Dispositif selon la revendication 4, **caractérisé en ce que** le détecteur d'angle incident (142) est configuré pour obtenir une pluralité de rapports entre l'angle incident ($\Theta c$) et l'intensité de réflexion (TS) à un même moment et **en ce que** l'unité d'affichage (20) est configurée pour afficher les rapports simultanément.

**7.** Dispositif selon l'une quelconque des revendications précédentes, **caractérisé en ce que** l'identificateur (143) est configuré pour diviser l'axe de l'angle incident en une pluralité de portions d'angle incident ayant une largeur d'angle incident prédéterminée et pour obtenir une caractéristique de distribution des intensités de réflexion basée sur une valeur représentative des intensités de réflexion dans chaque portion d'angle incident et pour identifier le type de corps mobile sous-marin sur la base de la caractéristique de distribution.

**8.** Dispositif selon la revendication 7, **caractérisé en ce que** l'identificateur est configuré pour stocker un modèle de la caractéristique de distribution pour chaque type de corps mobile sous-marin ($F_i$) et pour identifier le type de corps mobile sous-marin ($F_i$) sur la base d'un rapport entre la caractéristique de distribution obtenue et le modèle.

**9.** Dispositif selon la revendication 7 ou la revendication 8, **caractérisé en ce que** la valeur représentative est une valeur maximale ou une valeur moyenne ou une valeur centrale ou une valeur médiane parmi les intensités de réflexion dans la portion d'angle incident.

**10.** Dispositif selon l'une quelconque des revendications 7 à 9, comprenant en outre une commande d'affichage (144) configurée pour engendrer des données d'image basées sur au moins une parmi la distribution de la pluralité d'intensités de réflexion sur un axe d'angle incident et la caractéristique de distribution.

**11.** Dispositif selon l'une quelconque des revendications précédentes, **caractérisé en ce que** le corps mobile sous-marin est un poisson individuel ($F_i$).

**12.** Dispositif selon l'une quelconque des revendications précédentes, **caractérisé en ce que** l'angle incident est basé sur une direction normale sur une direction de mouvement du corps mobile sous-marin ($F_i$).

**13.** Procédé de détection sous-marine comprenant transmettre sous l'eau un signal ultrasonique et recevoir un signal d'écho causé par une réflexion du signal ultrasonique par un corps mobile sous-marin ($F_i$), et détecter, sur la base du signal d'écho, un angle incident ($\Theta c$) du signal ultrasonique par rapport au corps mobile sous-marin, une intensité de réflexion (TS) du signal d'écho réfléchi sur le corps mobile sous-marin et une existence du corps mobile sous-marin ($F_i$) sur la base de l'intensité de réflexion (TS), **caractérisé en ce que** le procédé comprend les étapes supplémentaires de :

détecter l'angle incident ($\Theta c$) sur la base d'une position du corps mobile sous-marin ($F_i$), identifier un type du corps mobile sous-marin ($F_i$) sur la base d'une pluralité de rapports entre l'angle incident ($\Theta c$) et l'intensité de réflexion (TS), l'identification étant basée sur une distribution d'une pluralité d'intensités de réflexion sur un axe d'angle incident.

**14.** Programme lisible par ordinateur contraignant un ordinateur à détecter sous l'eau, le programme comprenant contraindre l'ordinateur à transmettre sous l'eau un signal ultrasonique et à recevoir un signal d'écho causé par une réflexion du signal ultrasonique par un corps mobile sous-marin ($F_i$), et contraindre l'ordinateur à détecter, sur la base du signal d'écho, un angle incident ($\Theta c$) du signal ultrasonique par rapport au corps mobile sous-marin, une intensité de réflexion (TS) du signal d'écho réfléchi sur le corps mobile sous-marin et une existence du corps mobile sous-marin ($F_i$) sur la base de l'intensité de réflexion (TS), **caractérisé en ce que** le procédé comprend en outre :

contraindre l'ordinateur à détecter l'angle incident ($\Theta c$) sur la base d'une position du corps mobile sous-marin ($F_i$), contraindre l'ordinateur à identifier un type du corps mobile sous-marin ($F_i$) sur la base d'une pluralité de rapports entre l'angle incident ($\Theta c$) et l'intensité de réflexion (TS), l'identification étant basée sur une distribution d'une pluralité d'intensités de réflexion sur un axe d'angle incident.

FIG. 1

START

S101

DETECT INDIVIDUAL FISH BASED ON ECHO SIGNAL

S102

DETECT INCIDENT ANGLE θc FOR INDIVIDUAL FISH

S103

DETECT REFLECTION INTENSITY TS
FOR INDIVIDUAL FISH

S104

ACQUIRE INCIDENT ANGLE CHARACTERISTIC OF
REFLECTION INTENSITIES TS, AND IDENTIFY FISH
SPECIES

RETURN

FIG. 2

FIG. 3

FIG. 4

FIG. 5

START

SEPARATE REFLECTION INTENSITIES TS OF
EACH INDIVIDUAL FISH, FOR EACH INCIDENT ANGLE BIN
S401

DETECT MAXIMUM VALUE AMONG REFLECTION INTENSITIES TS
INCLUDED IN INCIDENT ANGLE BIN
S402

ESTIMATE INCIDENT ANGLE CHARACTERISTIC CURVE BASED
ON MAXIMUM VALUE IN EACH INCIDENT ANGLE BIN
S403

IDENTIFY FISH SPECIES FROM SIMILARITY BETWEEN ESTIMATED
INCIDENT ANGLE CHARACTERISTIC CURVE AND TEMPLATE
CHARACTERISTIC CURVE FOR EACH FISH SPECIES
S404

RETURN

FIG. 6

FIG. 7

FIG. 8

FIG. 9

FIG. 10

FIG. 11

**EP 2 538 240 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7218634 A
- US 20100284248 A
- US 5377163 A
- GB 2412967 A